# FASCICULE DE BREVET EUROPEEN

(11) **EP 0 910 755 B1**
(45) Date de publication et mention de la délivrance du brevet: **18.07.2001**
(21) Numéro de dépôt: 97932855.6
(22) Date de dépôt: 08.07.1997
(51) Int. Cl.: F16F 9/348, F16F 9/516

(54) **PISTON A CLAPET, EN PARTICULIER FLOTTANT, AVEC LOI EFFORT/VITESSE DISSYMETRIQUE POUR TUBE D'AMORTISSEUR HYDRAULIQUE**
KOLBEN MIT EINEM, INSBESONDERE FREI BEWEGLICHEN, VENTIL MIT ASYMMETRISCHER DÄMFUNGSKARAKTERISTIK FÜR HYDRAULISCHEN DÄMPFERZYLINDER
VALVE PISTON, IN PARTICULAR FLOATING, WITH ASYMMETRICAL PRESSURE/VELOCITY DISTRIBUTION FOR HYDRAULIC SHOCK ABSORBER TUBE

(30) Priorité: 12.07.1996 FR 9608777
(43) Date de publication de la demande: 28.04.1999
(73) Titulaire: SOCIETE FRANCAISE DES AMORTISSEURS DE CARBON, 27430 Ande (FR)
(72) Inventeur: PIRIOU, Ludovic, F-92310 Issy-les-Moulineaux (FR); CHARLEUX, Eric, F-71400 Autun (FR)
(74) Mandataire: Casalonga, Axel
(86) Numéro de dépôt international: FR9701231
(87) Numéro de publication internationale: WO9802673

(56) Documents cités:
- EP-A- 0 282 842
- EP-A- 0 481 469
- DE-U- 7 529 323
- FR-A- 1 491 122
- FR-A- 2 146 611
- FR-A- 2 231 895
- FR-A- 2 248 442
- FR-A- 2 325 856
- FR-A- 2 693 524
- US-A- 3 256 961
- US-A- 4 809 828

## Description

L'invention concerne les pistons d'amortisseur hydraulique, notamment ceux de type monotube pressurisé.

Un amortisseur hydraulique comporte un piston apte à coulisser à l'intérieur d'un tube pour séparer l'espace interne de celui-ci en deux chambres remplies de fluide. Un passage traversant est prévu au sein du piston pour mettre en communication les deux chambres, et coopère avec un système de clapet régulant l'ouverture du passage en fonction de l'écoulement du fluide qui dépend du fait que l'amortisseur se trouve dans une phase d'extension ou de compression.

Le brevet américain US-A- 4 809 828 décrit un système de clapet anti-retour offrant au fluide d'amortissement des passages différents selon d'une part le sens du mouvement du piston, et d'autre part la vitesse de déplacement de ce dernier. Le système comprend un sous-clapet pour définir un premier passage hydraulique afin de générer une face d'amortissement lorsque le piston se déplace à une vitesse extrêmement lente dans une direction donnée, et un clapet principal pour définir un second passage hydraulique afin de générer une force d'amortissement lorsque le piston se déplace à une vitesse moyenne ou grande dans la direction donnée.

On peut habituellement caractériser une suspension à partir d'une courbe donnant l'effort exercé sur l'amortisseur en fonction de la vitesse de débattement du piston à l'intérieur de celui-ci. Actuellement, pour les amortisseurs dont le piston est équipé d'un clapet flottant, bien connu de l'homme du métier, dans lequel les mêmes voies de passage servent à l'écoulement du fluide dans les deux sens, la loi effort-vitesse est quasiment symétrique en compression et en détente aux basses vitesses, c'est-à-dire pour des vitesses typiquement inférieures à 0,1 m/seconde.

Or, pour certains types de véhicule notamment, il s'avère préférable de disposer de lois effort-vitesse dissymétriques aux basses vitesses.

L'invention vise à apporter une solution à ce problème, en particulier pour les amortisseurs dont le piston est équipé d'un clapet flottant.

L'invention propose un piston et un clapet pour tube d'amortisseur hydraulique, notamment de type monotube pressurisé, comprenant un corps de piston possédant un passage permanent principal de fluide et un système de clapet disposé sur le corps de piston et coopérant avec ledit passage permanent principal pour contrôler dans les deux sens le débit du fluide à travers le passage.

Selon une caractéristique générale de l'invention, le système de clapet contrôlant le débit de fluide à travers le passage permanent principal est un système de clapet flottant disposé sur une face du corps de piston et comportant un empilement de plaques ainsi qu'un clapet flottant proprement dit en contact d'une part avec l'empilement et d'autre part avec un empilement du corps de piston, le corps de piston comporte au moins un premier passage permanent additionnel traversant de part en part le corps de piston et le système de clapet dans des premières zones choisies situées dans l'empilement de plaques. Le piston comporte également des premiers moyens d'obturation aptes à obturer une extrémité du premier passage permanent additionnel de façon à interdire l'écoulement de fluide dans un premier sens à travers ce premier passage permanent additionnel, et à autoriser l'écoulement de fluide à travers ce premier passage permanent additionnel dans un deuxième sens opposé au premier.

Lorsque le système de clapet comporte deux clapets disposés sur les deux faces opposées du corps de piston, les premières zones choisies de ces deux clapets traversées par le passage permanent additionnel sont les zones dans lesquelles ces clapets ne fléchissent pas.

Selon un mode de réalisation de l'invention, les premiers moyens d'obturation comportent un premier clapet anti-retour monté sur ressort.

L'invention permet donc d'ajouter un passage permanent uniquement en compression, ou uniquement en détente. Ce passage permanent additionnel agit sur les basses vitesses de piston, typiquement inférieures à 0,1 m/seconde avant l'ouverture du clapet flottant. On utilisera donc de préférence un clapet anti-retour faiblement taré de façon à ce que celui-ci puisse s'ouvrir dès les très basses vitesses.

Le terme "passage" utilisé dans la présente invention, que ce soit pour le passage permanent principal ou le ou les passages permanents additionnels, doit s'interpréter de façon très large. Ainsi, en pratique, le passage permanent principal associé au clapet flottant est en fait constitué d'une pluralité d'alvéoles et de crans pratiqués dans certaines plaques de l'empilement, tandis que chaque passage permanent additionnel est généralement constitué d'une pluralité de canaux.

Il est également possible de modifier la taille du premier passage permanent additionnel. A cet égard, on peut prévoir que le piston comporte une première rondelle crantée obstruant partiellement le premier passage additionnel permanent. La taille des crans permet de modifier la section du passage.

De même, on peut prévoir au moins une rondelle comportant un orifice d'un diamètre inférieur au diamètre du premier passage additionnel permanent de façon à créer un étranglement dans ce premier passage permanent additionnel. On modifie également ainsi la section du passage permanent additionnel.

Selon un mode de réalisation du piston selon l'invention, le corps de piston comporte un deuxième passage permanent additionnel traversant de part en part le corps de piston et le système de clapet dans les deuxièmes zones choisies. Le piston comporte alors des deuxièmes moyens d'obturation aptes à obturer une extrémité du deuxième passage permanent additionnel de façon à interdire l'écoulement de fluide dans le deuxième sens à travers ce deuxième passage permanent additionnel, et à autoriser l'écoulement de fluide à travers ce deuxième passage permanent additionnel dans le premier sens.

Les deuxièmes zones choisies sont définies d'une manière analogue à celle évoquée pour les premières zones choisies.

Ce mode de réalisation permet d'obtenir des passages permanents réellement indépendants en détente et en compression, c'est-à-dire des passages permanents additionnels qui ne s'influencent pas mutuellement. On peut également modifier la section de ce deuxième passage permanent additionnel en utilisant une ou des rondelles crantées et/ou une ou des rondelles équipées de trous calibrés ayant un diamètre inférieur à celui du deuxième passage permanent additionnel.

Quant aux deuxièmes moyens d'obturation, ils peuvent être réalisés également à l'aide d'un clapet anti-retour monté sur ressort.

D'autres avantages et caractéristiques de l'invention apparaîtront à l'examen de la description détaillée de modes de réalisation nullement limitatifs et des dessins annexés, sur lesquels :
- la figure 1 est une coupe longitudinale d'un tube d'amortisseur équipé d'un piston à clapet flottant selon l'art antérieur;
- la figure 2 est une vue plus détaillée du piston à clapet flottant de la figure 1;
- la figure 3 est une vue en coupe d'un premier mode de réalisation d'un piston selon l'invention;
- la figure 4 est une vue en coupe d'un deuxième mode de réalisation d'un piston selon l'invention;
- la figure 5 est une vue en coupe d'un troisième mode de réalisation d'un piston selon l'invention;
- la figure 6 est une vue en coupe d'un quatrième mode de réalisation d'un piston selon l'invention;
- les figures 7 et 8 illustrent des rondelles crantées permettant de modifier la section des passages permanents additionnels; et
- la figure 9 illustre une loi dissymétrique de vitesses obtenue à l'aide d'un piston selon l'invention.

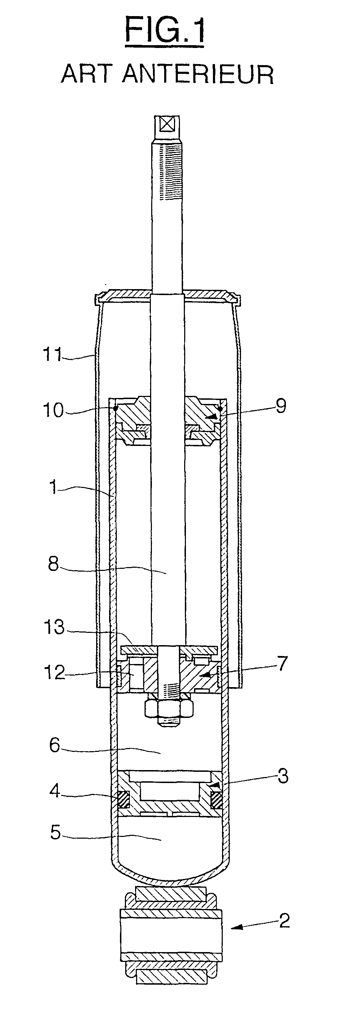

Tel qu'il est illustré sur la figure 1, l'amortisseur hydraulique télescopique monotube comprend un tube de cylindre 1 fixé à une de ses extrémités par un oeillet 2. Un piston séparateur gaz/liquide 3, monté libre à coulissement dans le cylindre 1 est muni d'un joint torique d'étanchéité 4 et sépare le cylindre en deux portions. Une portion 5 contient un gaz sous pression et l'autre portion 6 est remplie de fluide hydraulique. Un autre piston 7 est fixé à l'extrémité d'une tige 8 dont le déplacement dans le cylindre est guidé par le guide 9 fixé au cylindre par un moyen de fixation 10.

L'extrémité supérieure de la tige 8 est fixée à un goujon de fixation.

L'amortisseur est complété par un protecteur 11 solidaire de la tige 8 et venant coiffer une partie du cylindre 1.

Pour assurer le fonctionnement de l'amortisseur, le piston 7 comporte des passages permanents 12 pour le fluide hydraulique coopérant avec un clapet dit flottant.

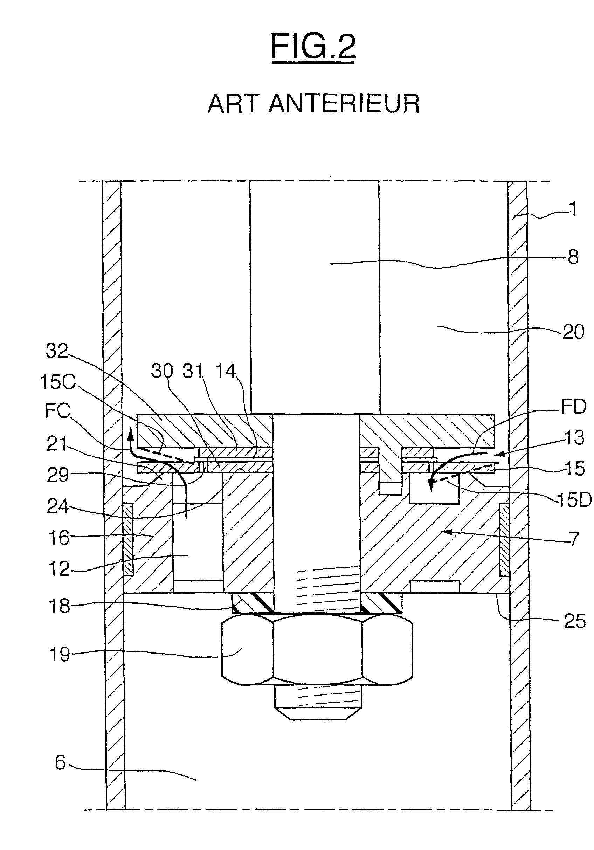

Tel qu'illustré sur la figure 2, le piston 7 comporte un corps de piston 16 de forme générale cylindrique, apte à coulisser à l'intérieur du tube 1, et comportant une pluralité d'alvéoles, par exemple au nombre de 8, débouchant de part et d'autre du corps de piston. Ces alvéoles définissent à l'intérieur du corps de piston, un passage 12 pour le fluide hydraulique entre la chambre supérieure 20 et la chambre inférieure 6.

La partie gauche de cette figure est une section longitudinale dans le plan de symétrie d'une alvéole, tandis que la partie droite est une section longitudinale effectuée entre deux alvéoles. Bien que chaque alvéole constitue une voie de passage bidirectionnelle pour le fluide, la partie gauche de la figure illustre, en tiretés, la configuration du clapet flottant dans la phase de compression, tandis que la partie droite illustre, en tiretés, la configuration de la phase de détente ou d'extension.

Le système de clapet 13, dit flottant, est disposé sur la face supérieure 24 du corps de piston 16 et comporte, de façon classique, une plaque annulaire centrale 30 entourée d'une couronne 15 (clapet flottant proprement dit) reposant en appui, d'une part sur un épaulement 21 du corps de piston, et, d'autre part, contre le bord libre d'une plaque supérieure 14 située sur la plaque centrale 30 et débordant légèrement de celle-ci. Sur la plaque supérieure 14 est disposée une autre plaque 31, cet empilement de plaques étant pris en sandwich entre la face supérieure 24 du piston et une plaque supérieure de fixation 32 comportant deux ergots fixés dans le corps de piston.

Les plaques 30 et 14 comportent des crans 29 définissant avec les alvéoles du corps de piston le passage permanent principal contrôlé par le système de clapet flottant 13. La couronne 15 est apte à fléchir selon la position 15C dans la phase de compression de l'amortisseur pour se décoller de l'épaulement 21 du piston et autoriser le passage du fluide selon la flèche FC. Dans la phase d'extension, le clapet 15 s'oriente selon la position 15D en se décollant de la plaque supérieure 14 pour autoriser le passage du fluide selon la flèche FD. L'inclinaison du clapet flottant en compression ou en détente ne se produit pas aux très basses vitesses, mais uniquement pour des vitesses supérieures à 0,1 ou 0,2 m/seconde.

L'invention prévoit l'adjonction de passages permanents additionnels contrôlés par des moyens d'obturation, tels que des clapets anti-retour, capables de s'ouvrir uniquement en détente ou uniquement en compression et ce dès les très basses vitesses. On obtient ainsi une loi dissymétrique effort/vitesse aux très basses vitesses, typiquement inférieures à 0,1 m/seconde.

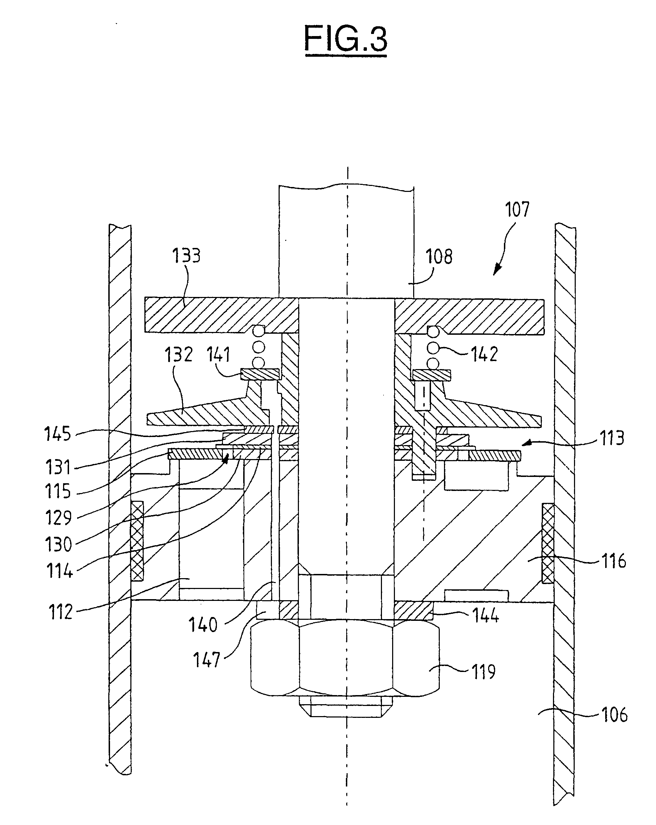

Sur la figure 3, qui illustre un premier mode de réalisation d'un piston selon l'invention, les éléments analogues ou ayant des fonctions analogues à ceux illustrés sur la figure 2, ont des références augmentées de 100 par rapport à celles qu'ils avaient sur cette figure 2. Seules les différences entre ces deux figures seront maintenant décrites.

Le piston 107 comporte un premier passage permanent additionnel 140 constitué d'une pluralité de canaux, et traversant de part en part le corps de piston 116.

Le passage 140 traverse également de part en part le système de clapet flottant 113 (en fait la plaque annulaire centrale 130, la plaque supérieure 114 et la plaque 131, mais non le clapet flottant proprement dit) ainsi que la pièce supérieure de fixation 132 fixée dans le corps de piston. Cette pièce 132 est en appui contre une plaque supérieure 133 elle-même en appui contre un épaulement de la tige 108.

Un clapet anti-retour 141, formé ici d'une rondelle, et monté sur ressort 142, obstrue l'extrémité supérieure du passage permanent additionnel 140.

Une rondelle crantée 144 disposée entre la face inférieure du piston et l'écrou de fixation 119, et comportant des crans 147 disposés en regard de l'autre extrémité du passage permanent additionnel 140, permet le passage du fluide entre la chambre 106 et le passage permanent 140.

Dans ce mode de réalisation, le passage permanent additionnel 140 en combinaison avec le clapet anti-retour 141 autorise le passage du fluide hydraulique à travers ce passage 140 uniquement en phase de compression (mouvement de descente de la tige 108). En effet, durant cette phase, le clapet 141 s'ouvre, tandis qu'en phase de détente (mouvement de montée de la tige 108), le clapet 141 demeure fermé.

Dans ce mode de réalisation, la section du passage permanent 140 est également partiellement obstruée par un étranglement 146 réalisé par l'insertion entre le système de clapet flottant 113 et la pièce 132 d'une rondelle 145 comportant des trous calibrés 146. On peut ainsi, en modifiant la valeur du diamètre de ces trous, ajuster très précisément la loi effort-vitesse en compression aux très basses vitesses.

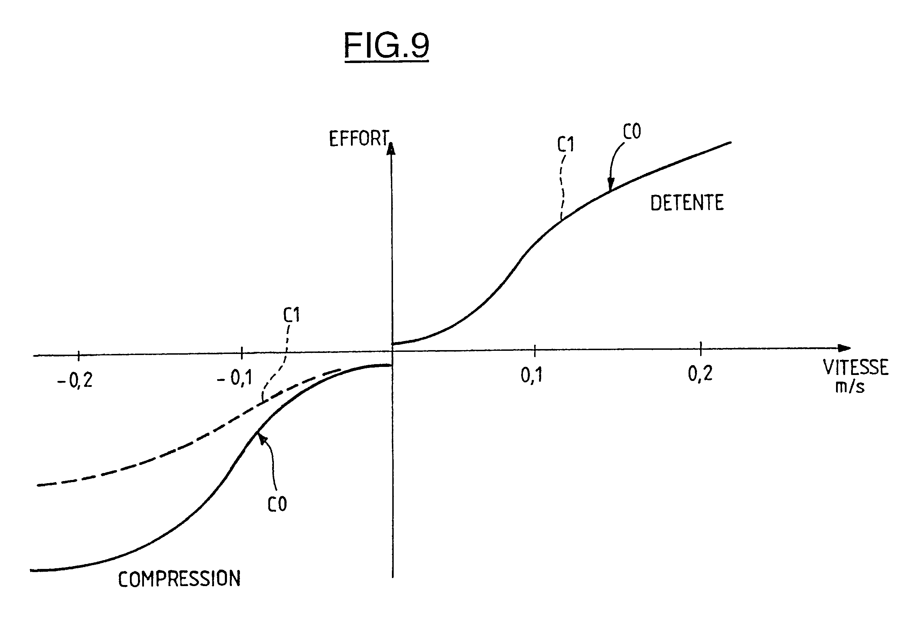

Un exemple d'une telle loi est illustré par la courbe C1 en tiretés sur la figure 9. Cette courbe C1 dans la phase de compression est différente de la courbe C0 obtenue par un piston selon l'art antérieur. Par contre, les courbes C0 et C1 sont identiques dans la phase de détente.

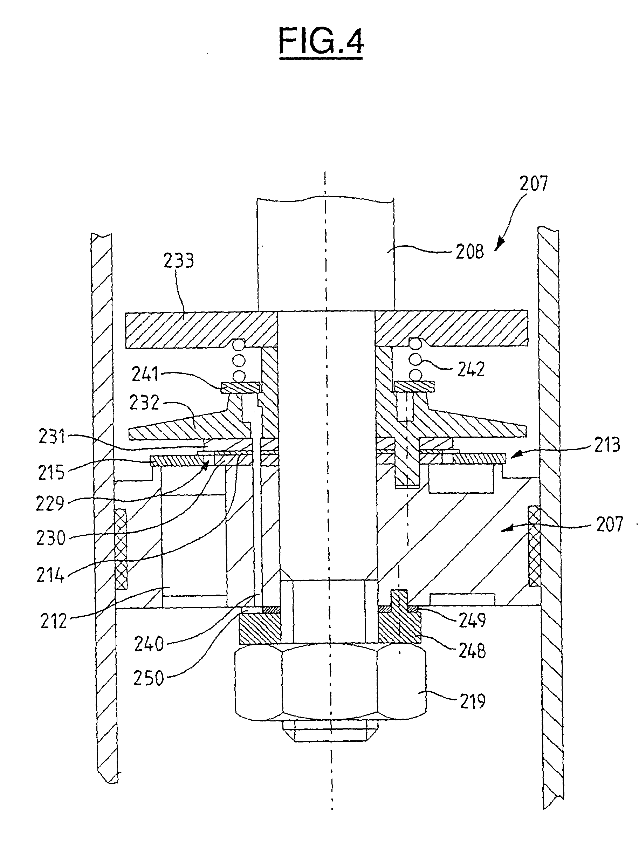

Le mode de réalisation illustré sur la figure 4 diffère de celui illustré sur la figure 3 par l'omission de la rondelle 145 à trous calibrés et par l'adjonction d'une rondelle inférieure 249 crantée disposée entre une pièce de fixation inférieure 248 et la face inférieure du corps de piston. Les crans 250 de cette rondelle 249 sont beaucoup plus étroits que ceux de la rondelle 144 et apportent donc une restriction supplémentaire d'écoulement dans le passage permanent additionnel 240.

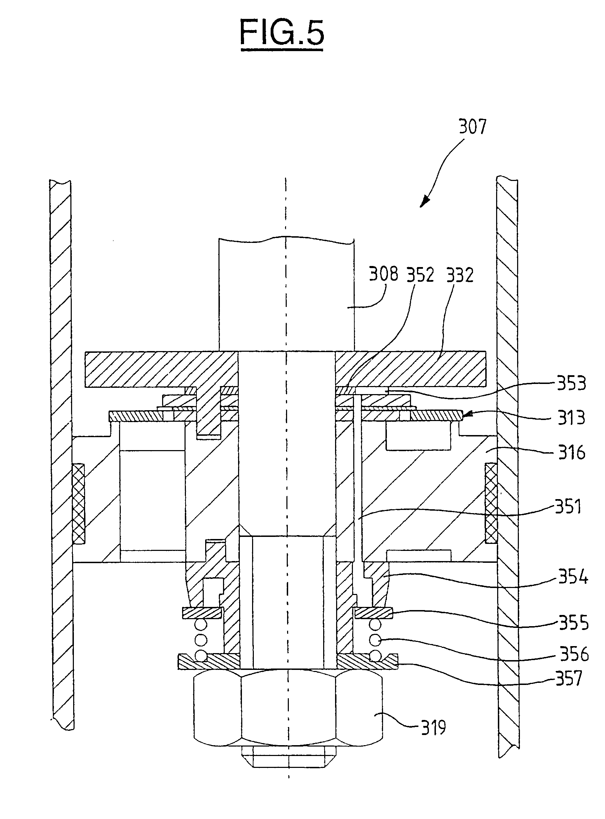

Le mode de réalisation illustré sur la figure 5 illustre un piston 307 équipé d'un passage permanent additionnel 351 fonctionnant uniquement en phase de détente.

Plus précisément, le passage permanent additionnel 351 traverse de part en part le corps de piston 316 ainsi que le système de clapet flottant 313 pour déboucher à l'extérieur du piston dans des crans 353 d'une rondelle crantée 352 disposée entre le système de clapet flottant et la pièce de fixation supérieure 332.

Le corps de piston 316 est en appui contre l'écrou 319 à l'aide d'une pièce de fixation inférieure 354 en appui contre une rondelle inférieure 357. Le passage permanent additionnel 351 débouche également à l'extérieur de la pièce 354 et est obturé par un clapet anti-retour 355 monté sous rappel élastique 356 contre la pièce 357.

En phase de compression, le clapet 355 demeure fermé, tandis qu'il s'ouvre en phase de détente dès les très basses vitesses.

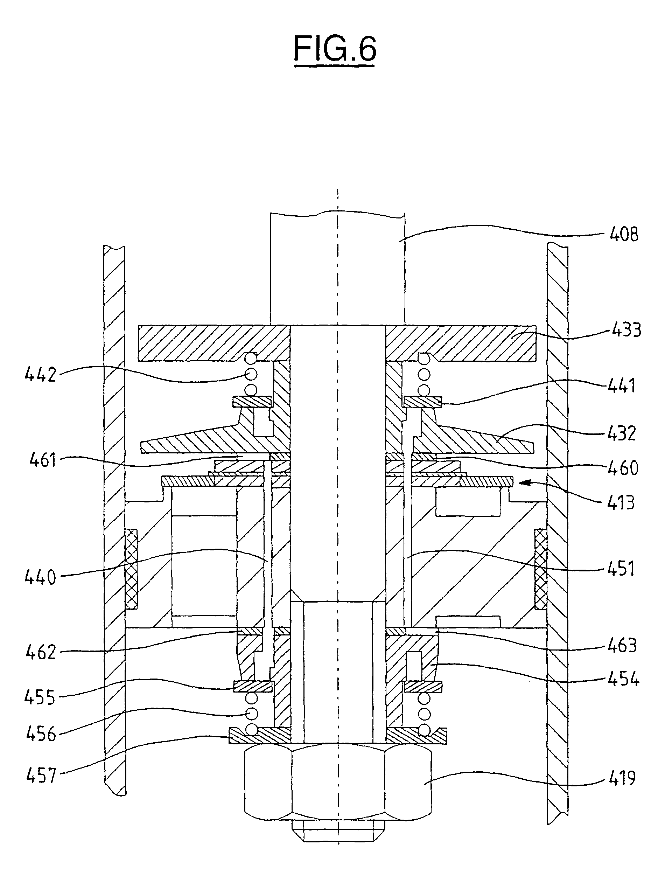

La figure 6 illustre un mode de réalisation d'un piston comportant un premier passage permanent additionnel 440 fonctionnant en détente et un deuxième passage permanent additionnel 451 fonctionnant en compression.

Plus précisément, en phase de détente, le fluide pénètre dans le passage 440 par l'intermédiaire des crans 461 de la rondelle crantée 460 disposée entre le système de clapet flottant 413 et la pièce 432, et ressort à l'autre extrémité du passage 440 puisque le clapet 455 s'ouvre. Par contre, dans cette phase de détente, le clapet anti-retour supérieur 441 demeure fermé de façon à obturer le passage permanent 451.

En phase de compression, le clapet anti-retour inférieur 455 demeure fermé obturant le passage permanent additionnel 440. Par contre, le clapet anti-retour 441 s'ouvre permettant la circulation du fluide dans le passage permanent 451 après avoir pénétré dans ce dernier par l'intermédiaire des crans 463 de la rondelle crantée inférieure 462.

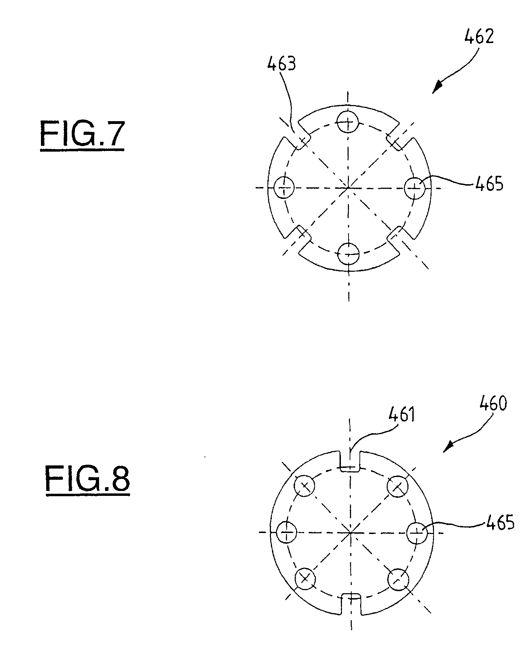

La figure 7 illustre schématiquement la rondelle crantée 462 équipée de quatre crans 463, tandis que la figure 8 illustre schématiquement la rondelle crantée 460 comportant deux crans 461. Ainsi, on remarque que le passage permanent additionnel 440 utilisable en détente comporte deux canaux et est donc différent du passage permanent additionnel 451 utilisable en compression et qui comporte quatre canaux. Les rondelles 462 et 460 sont positionnées correctement par rapport aux canaux additionnels par l'intermédiaire de trous de positionnement 465 coopérant avec des picots prévus dans les pièces 432 et 454.

D'une façon générale, le fait de ménager les passages permanents additionnels directement dans le corps de piston permet, d'une part, de pouvoir aisément modifier la section de ceux-ci par l'adjonction de rondelles à trous calibrés par exemple, mais permet également de pouvoir aisément disposer de passages permanents additionnels distincts en phase de compression et en phase de détente.

## Revendications

1. Piston à clapet pour tube damortisseur hydraulique, comprenant un corps de piston (116) possédant un passage permanent principal de fluide (112, 129), et un système de clapet (113) disposé sur le corps de piston et coopérant avec ledit passage permanent principal pour contrôler dans les deux sens le débit de fluide à travers le passage permanent principal, caractérisé par le fait que le système de clapet contrôlant le débit de fluide à travers le passage permanent principal est un système de clapet flottant (113) disposé sur une face du corps de piston, et comportant un empilement de plaques (130, 114, 131) coopérant avec un clapet flottant proprement dit, par le fait que le corps de piston (116) comporte au moins un premier passage permanent additionnel (140) traversant de part en part le corps de piston et le système de clapet dans des premières zones choisies situées dans l'empilement de plaques, et par le fait que le piston comporte des premiers moyens d'obturation (141) aptes à obturer une extrémité du premier passage permanent additionnel de façon à interdire l'écoulement de fluide dans un premier sens à travers ce premier passage permanent additionnel et à autoriser l'écoulement de fluide à travers ce premier passage permanent additionnel dans un deuxième sens opposé au premier.

2. Piston selon la revendication 1, caractérisé par le fait que les premiers moyens d'obturation comportent un premier clapet anti-retour (141) monté sous rappel élastique (142).

3. Piston selon la revendication 1 ou 2, caractérisé par le fait qu'il comporte au moins une première rondelle crantée (249) obstruant partiellement le premier passage additionnel permanent.

4. Piston selon l'une des revendications précédentes, caractérisé par le fait qu'il comporte au moins une rondelle (145) comportant un orifice (146) d'un diamètre inférieur au diamètre du premier passage additionnel permanent de façon à créer un étranglement dans ce premier passage permanent additionnel.

5. Piston selon l'une des revendications 1 à 4, caractérisé par le fait que le corps de piston comporte un deuxième passage permanent additionnel (440) traversant de part en part le corps de piston et le système de clapet dans des deuxièmes zones choisies, et par le fait que le piston comporte des deuxièmes moyens d'obturation (455) aptes à obturer une extrémité du deuxième passage permanent additionnel de façon à interdire l'écoulement de fluide dans le deuxième sens à travers ce deuxième passage permanent additionnel et à autoriser l'écoulement de fluide à travers ce deuxième passage permanent additionnel dans le premier sens.

6. Piston selon la revendication 5, caractérisé par le fait que les deuxièmes moyens d'obturation comportent un deuxième clapet anti-retour (455) monté sous rappel élastique (456).

7. Piston selon la revendication 5 ou 6, caractérisé par le fait qu'il comporte au moins une deuxième rondelle crantée (461) obstruant partiellement le deuxième passage additionnel permanent.

8. Piston selon l'une des revendications 5 à 7, caractérisé par le fait qu'il comporte au moins une rondelle comportant un orifice d'un diamètre inférieur au diamètre du deuxième passage additionnel permanent de façon à créer un étranglement dans ce deuxième passage permanent additionnel.

## Claims

1. Piston with valve for hydraulic shock-absorber tube comprising a piston body (116) having a main permanent passage for fluid (112, 129), and a valve system (113) arranged on the piston body and co-operating with the said main permanent passage to control in both directions the flow of fluid through the main permanent passage, characterised by the fact that the valve system controlling the flow of fluid through the main permanent passage is a floating valve system (113) arranged on one face of the piston body and including a stack of plates (130, 114, 131) co-operating with a floating valve proper, by the fact that the piston body (116) includes at least one first additional permanent passage (140) passing right through the piston body and the valve system in first selected zones situated in the stack of plates, and by the fact that the piston includes first blocking means (141) able to block one end of the first additional permanent passage so as to prevent the flow of fluid in a first direction through this first additional permanent passage and to allow the flow of fluid through this first additional permanent passage in a second direction opposite to the first.

2. Piston as described in claim 1, characterised by the fact that the first blocking means include a first non-return valve (141) mounted under elastic return bias (142).

3. Piston as described in claim 1 or 2, characterised by the fact that it includes at least a first notched washer (249) partially blocking the first additional permanent passage.

4. Piston as described in one of the preceding claims, characterised by the fact that it includes at least one washer (145) including an orifice (146) having a diameter less than the diameter of the first additional permanent passage so as to create a choke in this first additional permanent passage.

5. Piston as described in one of claims 1 to 4, characterised by the fact that the piston body includes a second additional permanent passage (440) passing right through the piston body and the valve system in second selected zones and by the fact that the piston includes second blocking means (455) able to block one end of the second additional permanent passage so as to prevent the flow of fluid in the second direction through this second additional permanent passage and to allow the flow of fluid through this second additional permanent passage in the first direction.

6. Piston as described in claim 5, characterised by the fact that the second blocking means include a second non-return valve (455) mounted under elastic return bias (456).

7. Piston as described in claim 5 or 6, characterised by the fact that it includes at least a second notched washer (461) partially obstructing the second additional permanent passage.

8. Piston as described in one of claims 5 to 7, characterised by the fact that it includes at least one washer having an orifice of a diameter less than the diameter of the second additional permanent passage so as to create a choke in this second additional permanent passage.

## Patentansprüche

1. Kolben mit Ventilklappe(n) für ein Rohr eines hydraulischen Stoßdämpfers, mit einem Kolbenkörper (116), der einen permanenten Fluid-Hauptdurchgang (112,129) aufweist, und einem am Kolbenkörper angeordneten und mit dem permanenten Hauptdurchgang zusammenwirkenden Ventilklappensystem (113) zur Steuerung des Fluiddurchsatzes durch den permanenten Hauptdurchgang in beiden Richtungen,
dadurch gekennzeichnet, daß
das den Fluiddurchsatz durch den permanenten Hauptdurchgang steuernde Ventilklappensystem ein schwimmendes Ventilklappensystem (113) ist, das auf einer Seite des Kolbenkörpers angeordnet ist und übereinandergeschichtete Platten (130,114,131) aufweist, die mit der eigentlichen schwimmenden Ventilklappe zusammenwirken,
der Kolbenkörper (116) mindestens einen zusätzlichen ersten permanenten Durchgang (140) aufweist, der durch den gesamten Kolbenkörper sowie das Ventilklappensystem in ersten ausgesuchten Zonen hindurchgeht, die in den aufeinandergeschichteten Platten gelegen sind,
der Kolben erste Schließmittel (141) umfaßt, die ein Ende des zusätzlichen ersten permanenten Durchgangs derart verschließen können, daß sie eine Fluidströmung durch den zusätzlichen ersten permanenten Durchgang in einer ersten Richtung verhindern und eine Fluidströmung durch den zusätzlichen ersten permanenten Durchgang in einer zweiten, der ersten Richtung entgegengesetzten Richtung gestatten.

2. Kolben gemäß Anspruch 1, dadurch gekennzeichnet, daß die ersten Schließmittel ein erstes Rückschlagventil (141) aufweisen, das unter einem elastischen Rückfederungselement (142) angebracht ist.

3. Kolben gemäß Anspruch 1 oder 2, dadurch gekennzeichnet, daß er mindestens eine erste gekerbte Scheibe (249) umfaßt, die den zusätzlichen ersten permanenten Durchgang teilweise verschließt.

4. Kolben gemäß einem der vorangehenden Ansprüche, dadurch gekennzeichnet, daß er mindestens eine Scheibe (145) mit einer Öffnung (146) mit geringerem Durchmesser als dem des zusätzlichen ersten permanenten Durchgangs aufweist, so daß in dem zusätzlichen ersten permanenten Durchgang eine Verengung erzeugt wird.

5. Kolben gemäß einem der Ansprüche 1 bis 4, dadurch gekennzeichnet, daß der Kolbenkörper einen zusätzlichen zweiten permanten Durchgang (440) umfaßt, der durch den gesamten Kolbenkörper sowie durch das Ventilklappensystem in zweiten ausgesuchten Zonen hindurchgeht, und daß der Kolben zweite Schließmittel (455) aufweist, die ein Ende des zusätzlichen zweiten permanenten Durchgangs derart verschließen können, daß sie eine Fluidströmung durch den zusätzlichen zweiten permanenten Durchgang in einer zweiten Richtung verhindern und eine Fluidströmung durch diesen zusätzlichen zweiten permanenten Durchgang in der ersten Richtung gestatten.

6. Kolben gemäß Anspruch 5, dadurch gekennzeichnet, daß die zweiten Schließmittel ein unter einem elastischen Rückfederungselement (456) angebrachtes Rückschlagventil (455) umfassen.

7. Kolben gemäß Anspruch 5 oder 6, dadurch gekennzeichnet, daß er mindestens eine zweite gekerbte Scheibe (461) aufweist, die den zusätzlichen zweiten permanenten Durchgang teilweise verschließt.

8. Kolben gemäß einem der Ansprüche 5 bis 7, dadurch gekennzeichnet, daß er mindestens eine Scheibe umfaßt, die eine Öffnung mit einem Durchmesser aufweist, der geringer ist als der des zusätzlichen zweiten permanenten Durchgangs, um eine Verengung in diesem zusätzlichen zweiten permanenten Durchgang zu erzeugen.
